**Europäisches Patentamt**

**European Patent Office**

**Office européen des brevets**

(19)

(11) Veröffentlichungsnummer : **0 033 838**
**B1**

(12)

# EUROPÄISCHE PATENTSCHRIFT

(45) Veröffentlichungstag der Patentschrift :
**24.08.83**

(51) Int. Cl.³ : **C 22 B 60/02**

(21) Anmeldenummer : **81100105.6**

(22) Anmeldetag : **09.01.81**

(54) **Verfahren zur Gewinnung von Uran aus Nassverfahrensphosphorsäure.**

(30) Priorität : **09.02.80 DE 3004925**

(43) Veröffentlichungstag der Anmeldung :
**19.08.81 Patentblatt 81/33**

(45) Bekanntmachung des Hinweises auf die Patenterteilung : **24.08.83 Patentblatt 83/34**

(84) Benannte Vertragsstaaten :
**BE DE FR GB NL**

(56) Entgegenhaltungen :
**US A 2 859 092**
**US A 2 859 094**
**US A 3 880 980**

(73) Patentinhaber : **HOECHST AKTIENGESELLSCHAFT**
**Postfach 80 03 20**
**D-6230 Frankfurt am Main 80 (DE)**

(72) Erfinder : **Schimmel, Günther, Dr.**
**Am Beissel 27**
**D-5042 Erftstadt (DE)**
Erfinder : **Gradl, Reinhard, Dr.**
**Am grünen Weg 6**
**D-5030 Hürth (DE)**
Erfinder : **Heymer, Gero, Dr.**
**Fasanenaue 12**
**D-5042 Erftstadt (DE)**

EP 0 033 838 B1

## Verfahren zur Gewinnung von Uran aus Naßverfahrensphosphorsäure

Die vorliegende Erfindung betrifft ein Verfahren zur Gewinnung von Uran aus einem Raffinat, das durch Extraktion von Phosphorsäure aus uranhaltiger Naßverfahrensphosphorsäure erhalten wurde. Diese Extraktion erfolgt dabei in Gegenwart einer Mineralsäure mit Hilfe von organischen Lösungsmitteln, die mit Wasser nicht oder nur begrenzt mischbar sind. Den nach dem Abtrennen des entstandenen organischen Phosphorsäureextraktes verbleibenden Rückstand bezeichnet man in der Regel als Raffinat.

Naßverfahrensphosphorsäure wird gewonnen durch Aufschluß von Phosphatmineralien mit Mineralsäuren, vorzugsweise mit Schwefelsäure, wobei das ausgefällte Calciumsulfat durch Filtration abgetrennt wird. Solche Säuren enthalten den Großteil der im Phosphat eingeschlossenen kationischen Verunreinigungen in gelöster Form, u. a. auch Uran, je nach Provenienz des Erzes in einer Menge von 100-400 ppm, bezogen auf $P_2O_5$.

Es existieren bereits mehrere Verfahren, nach denen das in Naßphosphorsäuren mit ca. 30 Gew.% $P_2O_5$ gelöste Uran durch eine mehrstufige Gegenstromextraktion mit einem nicht mit Wasser mischbaren Lösemittelgemisch, meistens bestehend aus einem Kohlenwasserstoff wie Kerosin, einem Dialkylphosphorsäureester wie Di(ethylhexyl)phosphat (DEHPA) und einem Trialkylphosphinoxid wie Tri-n-octylphosphinoxid (TOPO) in die organische Phase extrahiert wird. Die Grundlagen dieser Verfahren sind im ORNL-Report TM-2522 vom April 1969 unter dem Titel « Solvent Extraction of Uranium from Wet-Process Phosphoric Acid » sowie beispielsweise in der US-PS 2 859 092 und US-PS 2 859 094 beschrieben.

Diesen bekannten Arbeitsweisen sind mehrere Nachteile gemeinsam : Die niedrige Uran-Konzentration in der Phosphorsäure sowie der hohe $P_2O_5$-Gehalt von ca. 30 Gew.%, der die Extraktionsausbeute stark beeinträchtigt, bewirken, daß selbst in einer 4-6 stufigen Extraktion nur eine Uran-Anreicherung um den Faktor 2-3 in der Extraktphase gegenüber der Trägerphase erzielt werden kann. Außerdem wird aufgrund der hohen Eisenkonzentration in der Phosphorsäure ($\sim 0{,}5\ \%/P_2O_5$), trotz des vergleichsweise niedrigen Verteilungskoeffizienten eine beträchtliche Menge kontaminierendes Eisen in die organische Phase mitübergeführt (vgl. nachfolgendes Beispiel 7).

Hinzu kommt, daß sich die in den rohen Naßverfahrensphosphorsäuren enthaltenen organischen Verunreinigungen störend bei der Uranextraktion auswirken und vieles andere mehr.

Aus diesen Gründen wurde daher schon versucht (US-PS 3 880 980), aus einer durch Aufschluß von Phosphaterz mit Salzsäure erhaltenen rohen Naßverfahrensphosphorsäure ($H_3PO_4$-Gehalt von 10 bis 30 Gew.%) mit einem organischen Lösungsmittel zunächst die Phosphorsäure zu extrahieren.

Dabei wandert die Phosphorsäure in die organische Phase, während das Uran in der wäßrigen Raffinatphase verbleibt, aus der es mittels eines Festbett-Anionenaustausches in Form eines Chlorokomplexes gewonnen werden kann. Um während der Phosphorsäureextraktion den Übergang des Urans in die organische Phase zu verhindern, muß es zuvor durch ein Reduktionsmittel in die vierwertige Form gebracht und vor der Adsorption am Ionenaustauscher erneut oxidiert werden. Aus diese Weise kann durch Eluierung des Anionenaustausches eine wäßrige Lösung mit maximal 0,7 Gew.% Uran erhalten werden.

Überraschenderweise wurde gefunden, daß die Extraktion des Urans aus Naßverfahrensphosphorsäure wesentlich verbessert und vereinfacht wird, wenn man nicht von der rohen Phosphorsäure direkt, sondern von dem schwefelsauren, wäßrigen Rückstand einer Phosphorsäureextraktionsreinigung, dem sog. Raffinat ausgeht. Insbesondere gelingt dadurch die vollständige Aufnahme des Urans im Extraktionsmittel bei einem außerordentlich kleinen Verhältnis von Lösungsmittel zu Trägerphase unter Anwendung einer geringen Stufenzahl, wobei ein Höchstmaß an Uran in reiner Form gewonnen wird, nachdem bereits vorher — ebenfalls mit hohen Ausbeuten — die in den eingesetzten Naßverfahrensphosphorsäuren enthaltene Phosphorsäure mit großem Reinheitsgrad isoliert worden ist.

Im einzelnen verfährt man erfindungsgemäß so, daß man das als Rückstand verbliebene Raffinat durch thermische Behandlung von gelösten oder emulgierten Extraktionsmittelresten befreit, dann aus dem behandelten Raffinat unter Verwendung von mit Wasser nicht mischbaren Lösungsmitteln für Uran das Uran extrahiert und den gewonnenen Uranextrakt vom nicht gelösten Teil des Raffinats abtrennt.

Vorzugsweise wird dabei ein Raffinat eingesetzt, das vor der thermischen Behandlung einen $P_2O_5$-Gehalt von höchstens 10 Gew.%, einen Gehalt an Schwefelsäure von 5 bis 50 Gew.%, vorzugsweise von 10 bis 30 Gew.%, und einen Gehalt an gelöstem oder emulgiertem organischen Extraktionsmittel von 0,1 bis 5 Gew.%, vorzugsweise von 0,5 bis 2 Gew.%, aufweist.

Vorteilhafterweise führt man die thermische Behandlung des Raffinats durch Strippen mit Wasserdampf durch. Als Lösungsmittel für das Uran eignen sich alle für diesen Zweck bekannten Substanzen, wie z. B. Dialkylphosphorsäureester und Trialkylphosphinoxide in Form von Lösungen in mit Wasser nicht mischbaren organischen Lösungsmitteln.

Insbesondere eignen sich hierfür Di(ethylhexyl)phosphat und Tri-n-octylphosphinoxid sowie als Lösungsmittel Kerosin, wobei die Lösungen pro Liter Kerosin üblicherweise 0,1 bis 0,5 Mol Di(ethylhexyl)phosphat und/oder 0,01 bis 0,2 Mol Tri-n-octylphosphinoxid enthalten.

Mit besonderem Vorteil setzt man ein Raffinat ein, welches erhalten wurde, indem man von einer Naßverfahrensphosphorsäure ausgeht, die einen $P_2O_5$-Gehalt von 40 bis 55 Gew.% besitzt, dann diese Säure mit einem $C_5$-Alkohol in einer n-stufigen Anlage, in der n gleich oder größer 5 ist, in der Weise extrahiert, daß man in einer der Stufen n = 4 bis (n − 1) Schwefelsäure in einer Menge von 2 bis 20 Gew.%, bezogen auf $P_2O_5$, zugibt und den $C_5$-Alkohol sowie die Schwefelsäure im Gegenstrom zur Phosphorsäure führt, wobei man pro Volumenteil Phosphorsäure 2,5 bis 5,5 Volumenteile wasserfreien $C_5$-Alkohol oder 6,0 bis 8,2 Volumenteile wassergesättigten $C_5$-Alkohol einsetzt.

Aus dem erfindungsgemäß gewonnenen Uranextrakt läßt sich das Uran in bekannter Weise isolieren ; beispielsweise dadurch, daß man es durch Reextraktion mit einer Ammoniumcarbonatlösung in Form von festem Ammoniumuranyltricarbonat abscheidet.

Es war für einen Fachmann völlig überraschend, daß es durch die erfindungsgemäßen Maßnahmen möglich wurde, das Uran aus den Phosphorsäureraffinaten praktisch quantitativ ohne vorherige Reduktions- oder Oxidationsschritte mit einem Minimum von Extraktionsmittel zu extrahieren, denn für eine erfolgreiche Extraktion sind nur Volumenverhältnisse von Uranextraktionsmittel zu Raffinat erforderlich, die kleiner als 1 : 5, vorzugsweise nur 1 : 10 bis 1 : 30, sind. Um so erstaunlicher war es, daß trotz dieses extrem kleinen Volumenstrom-Verhältnisses hohe Urankonzentrationen im Extrakt von etwa 0,2-1,4 Gew.% bei niedrigen Eisen-konzentrationen von etwa 100 bis 800 ppm erzielt werden. Dadurch wird es möglich, bei der Extraktion des Urans aus dem Raffinat bereits in einer 2-4-stufigen Mixer-Settler-Gegenstromapparatur eine Anreicherung des Urans in der organischen Phase bei einem Volumenstromverhältnis von Lösungsmittel : Raffinat von kleiner 1 : 5 um den Faktor 10-30 zu erreichen, wobei die Ausbeute größer als 95 % ist.

Zusammenfassend ergeben sich für das erfindungsgemäße Verfahren zur Extraktion von Uran aus Naßverfahrensphosphorsäure die folgenden Vorteile :

1. Bei der oben beschriebenen Art der extraktiven Reinigung von Naßverfahrensphosphorsäure wird ein Raffinat als Ausgangsprodukt gewonnen, das Uran bereits in 3-5 mal so hoher Konzentration enthält, wie eine rohe Phosphorsäure mit etwa 30 Gew.% $P_2O_5$. Dadurch werden die bei der Uran-Extraktion benötigten Volumenströme um einen entsprechenden Faktor kleiner. Die Extraktionsapparaturen können dadurch erheblich kleiner dimensioniert werden.

2. Das U-haltige Raffinat enthält keine emulsionsbildenden organischen Bestandteile.

3. Durch die vorherige Entfernung von Lösemittelresten aus den Raffinaten wird das gesamte darin enthaltene Uran in eine leicht extrahierbare Form überführt.

4. Bedingt durch den niedrigen $P_2O_5$-Gehalt und den hohen $SO_4$-Gehalt der erdindungsgemäß eingesetzten Raffinate ist selbst bei einem Phasenverhältnis Raffinat : Lösungsmittel von größer als 10 : 1 die Uran-Extraktionsausbeute in einer 2-4-stufigen Mixer-Settler-Apparatur praktisch quantitativ.

5. Die Reinheit der Extraktphase, insbesondere bezüglich der Eisen-Ionen, ist außerordentlich hoch, d. h., die Selektivität ist ausgezeichnet.

In den folgenden Beispielen soll die Erfindung näher erläutert werden, ohne sie jedoch darauf zu beschränken.

Eine durch Aufschluß von Marokko-Phosphat mit Schwefelsäure erhaltene rohe Naßverfahrensphosphorsäure besaß folgende Zusammensetzung :

| | |
|---|---|
| $P_2O_5$ | 48,3 Gew.% |
| Fe | 0,2 Gew.% |
| Al | 0,12 Gew.% |
| Mg | 0,42 Gew.% |
| F | 0,34 Gew.% |
| V | 185 ppm |
| U | 117 ppm |
| $SO_4$ | 0,31 Gew.% |

Von dieser Rohsäure wurden 1 l/h zusammen mit 250 ml/h rezirkulierter Waschlösung in einer 8-stufigen Gegenstromanlage mit 6 l wasserhaltigem n-Amylalkohol extrahiert, wobei die wäßrige Phase in der Mischzone vorgelegt und darin die organische Phase dispergiert wurde.

Zusätzlich wurden in die 6. Stufe 58 ml/h konzentrierte Schwefelsäure eindosiert.

Es hinterblieben 635 g/h Raffinat der nachfolgenden Zusammensetzung, so daß der Endverlust, bezogen auf das mit der Rohsäure eingesetzte $P_2O_5$, 5,0 % betrug.

Zusammensetzung des Raffinats :

| | | | | | | | | |
|---|---|---|---|---|---|---|---|---|
| $P_2O_5$ | 6,0 | Gew.% | Mg | 1,0 | Gew.% | U | 290 | ppm |
| Fe | 0,5 | Gew.% | F | 0,6 | Gew.% | $SO_4$ | 15,9 | Gew.% |
| Al | 0,3 | Gew.% | V | 460 | ppm | | | |
| Amylalkohol | 0,4 | Gew.% | | | | | | |

## Beispiele 1-5

Nachdem das oben genannte Raffinat auf Temperaturen oberhalb 70 °C vorgeheizt ist, werden davon pro Stunde 2,0 Liter am Kopf einer beheizten Doppelmantel-Stahlkolonne — deren Innendurchmesser 35 mm und deren wirksame Höhe 1 m beträgt und die mit Raschig-Ringen gefüllt ist — eingepumpt und mit einer solchen Menge an entspanntem Dampf von ca. 100 °C, der am unteren Kolonnenende eingegeben wird, im Gegenstrom unter Normaldruck gestrippt, daß pro Stunde 2,0 Liter gestripptes Raffinat am Kolonnenboden ausgeschleust werden.

Dabei wird der Alkoholgehalt auf weniger als 50 ppm (Nachweisgrenze) abgebaut. Die übrigen Komponenten des Raffinats bleiben in den oben genannten Mengen enthalten.

Das so behandelte Raffinat wird mit wechselnden Mengen einer Lösung aus Di(ethylhexyl)phosphat (DEHPA) und Tri-n-octylphosphinoxid (TOPO) in Kerosin 15 Minuten bei Raumtemperatur intensiv gerührt und anschließend durch Analyse des Urans der Verteilungskoeffizient Ea (= Quotient der Urankonzentration in Extrakt- und Trägerphase) sowie die Extraktionsausbeute bestimmt.

### Beispiel 6 (Vergleichsbeispiel)

Es wird das gleiche Raffinat, jedoch in ungestrippter Form, analog Beispiel 1-5 eingesetzt.

### Beispiel 7 (Vergleichsbeispiel)

Es wird analog Beispiel 1-6 statt des Raffinates eine an $P_2O_5$-30 Gew.%ige grüne Rohphosphorsäure (Provenienz : Marokko) mit folgenden analytischen Daten eingesetzt :

| | | | | | |
|---|---|---|---|---|---|
| $SO_4$ | 0,2 | Gew.% | Fe | 0,14 | Gew.% |
| F | 0,2 | Gew.% | U | 0,008 | Gew.% |

Die Ergebnisse dieser Beispiele sind in Tabelle 1 zusammengefaßt.

### Tabelle 1

| Beispiel | A : O (Vol.) | Konzentrationen in mol/l Kerosin-Lösung | | | Verteilungs- koeffizient Ea | | Extraktionsausbeute in % | |
|---|---|---|---|---|---|---|---|---|
| | | DEHPA | TOPO | DEHPA + TOPO | U | Fe | U | Fe |
| 1 | 5 : 1 | 0,16 | 0,04 | 0,2 | 85,9 | 0,2 | 94,5 | 3,9 |
| 2 | 10 : 1 | 0,175 | 0,05 | 0,225 | 49,2 | 0,09 | 83,1 | 0,9 |
| 3 | 10 : 1 | 0,2 | 0,05 | 0,25 | 61,4 | 0,08 | 86,0 | 0,8 |
| 4 | 10 : 1 | 0,26 | 0,1 | 0,36 | 97,5 | n. b. | 90,7 | n. b. |
| 5 | 20 : 1 | 0,175 | 0,075 | 0,25 | 39,0 | 0,08 | 66,1 | 0,4 |
| 6 | 5 : 1 | 0,16 | 0,04 | 0,2 | 1,4 | n. b. | 22,4 | n. b. |
| 7 | 10 : 1 | 0,2 | 0,05 | 0,25 | 1,9 | 0,17 | 15,8 | 1,7 |

A = Raffinat, O = Extrakt.

### Beispiel 8-9

In Abänderung von Beispiel 1-5 wird die Extraktion des Raffinats im Gegenstrom in einer zwei- bzw. vierstufigen Mixer-Settler-Apparatur vorgenommen, wobei stündlich die unten genannte Menge Raffinat und jeweils 100 ml organische Phase (0,2 M DEHPA und 0,05 M TOPO in Kerosin) gefördert werden. Dabei ergeben sich die folgenden Konzentrationen in der Extraktphase sowie die daraus resultierenden Extraktionsausbeuten.

### Tabelle 2

| Beisp. | Stufenzahl | Raffinat ml/h | Konzentrationen im Extrakt in % | | Extr. Ausbeute in % | |
|---|---|---|---|---|---|---|
| | | | U | Fe | U | Fe |
| 8 | 2 | 1 000 | 0,43 | 0,07 | 98,7 | 0,9 |
| 9 | 4 | 2 000 | 0,83 | 0,025 | 95,2 | 0,2 |

Beispiel 10-11

Der im Beispiel 9 gewonnene Extrakt, der 350 ppm $H_3PO_4$ enthält, wird im Gegenstrom in einer zweistufigen Mixer-Settler-Apparatur sukzessive mit reiner Phosphorsäure (30 Gew.% $P_2O_5$), zur Entfernung des Eisens, und mit Wasser, zur Entfernung der Phosphorsäure, gewaschen, wobei sich folgende Abreicherung an Eisen bzw. Phosphorsäure ergibt.

Tabelle 3

| Beispiel | A : O (Vol.) | Konzentrationen im Extrakt in ppm | | Abreicherung in % | |
|---|---|---|---|---|---|
| | | $H_3PO_4$ | Fe | $H_3PO_4$ | Fe |
| 10 | 1 : 20 | 1 010 | 20 | — | 92 |
| 11 | 1 : 4 | 40 | 19 | 96 | — |

A = wäßrige, O = organische Phase.

Beispiel 12

Durch zweistufige Gegenstromextraktion des gewaschenen Extrakts mit 2 M Ammoniumcarbonatlösung im Phasenverhältnis 15 : 1 wird das Uran fast quantitativ reextrahiert und fällt aus der wäßrigen Phase in Form von Ammoniumuranyltricarbonat (AUT) aus. Der Gehalt an Uran im reextrahierten Extrakt beträgt 79 ppm, d. h. die Reextraktionsbeute beträgt 99 %. Der Gehalt an Eisen im AUT, bezogen auf Uran, ist < 0,3 %.

**Ansprüche**

1. Verfahren zur Gewinnung von Uran aus einem Raffinat, das durch Extraktion von Phosphorsäure aus uranhaltiger roher Naßverfahrensphosphorsäure in Gegenwart einer Mineralsäure mit Hilfe von organischen Extraktionsmitteln, die mit Wasser nicht oder nur begrenzt mischbar sind, und nach Abtrennen des entstandenen organischen Phosphorsäureextrakts vom nicht in den Extrakt aufgenommenen Rückstand erhalten wurde, dadurch gekennzeichnet, daß man das als Rückstand verbliebene Raffinat durch thermische Behandlung von gelösten oder emulgierten Extraktionsmittelresten befreit, dann aus dem behandelten Raffinat unter Verwendung von mit Wasser nicht mischbaren Lösungsmitteln für Uran das Uran extrahiert und den gewonnenen Uranextrakt vom nicht gelösten Teil des Raffinats abtrennt.

2. Verfahren nach Anspruch 1, dadurch gekennzeichnet, daß man ein Raffinat einsetzt, das vor der thermischen Behandlung einen $P_2O_5$-Gehalt von höchstens 10 Gew.%, einen Gehalt an Schwefelsäure von 5 bis 50 Gew.% und einen Gehalt an gelöstem oder emulgiertem organischen Extraktionsmittel von 0,1 bis 5 Gew.% aufweist.

3. Verfahren nach Anspruch 1 oder 2, dadurch gekennzeichnet, daß man die thermische Behandlung des Raffinats durch Strippen mit Wasserdampf durchführt.

4. Verfahren nach einem der Ansprüche 1 bis 3, dadurch gekennzeichnet, daß man als organische Lösungsmittel zur Extraktion des Urans Lösungen von Dialkylphosphorsäureestern und Trialkylphosphinoxiden in einem mit Wasser nicht mischbaren Lösungsmittel, einzeln oder im Gemisch miteinander einsetzt.

5. Verfahren nach Anspruch 4, dadurch gekennzeichnet, daß man als Dialkylphosphorsäureester Di(ethylhexyl)phosphat, als Trialkylphosphinoxid Tri-n-octylphosphinoxid und als nicht wasserlösliches organisches Lösungsmittel Kerosin einsetzt.

6. Verfahren nach einem der Ansprüche 1 bis 5, dadurch gekennzeichnet, daß man ein Raffinat einsetzt, welches erhalten wurde, indem man von einer Naßverfahrensphosphorsäure ausgeht, die einen $P_2O_5$-Gehalt von 40 bis 55 Gew.% besitzt, diese Säure mit einem $C_5$-Alkohol in einer n-stufigen Anlage, in der n gleich oder größer 5 ist, in der Weise extrahiert, daß man in einer der Stufen n = 4 bis (n − 1) Schwefelsäure in einer Menge von 2 bis 20 Gew.%, bezogen auf $P_2O_5$, zugibt und den $C_5$-Alkohol sowie die Schwefelsäure im Gegenstrom zur Phosphorsäure führt, wobei man pro Volumenteil Phosphorsäure 2,5 bis 5,5 Volumenteile wasserfreien $C_5$-Alkohol oder 6,0 bis 8,2 Volumenteile wassergesättigten $C_5$-Alkohol einsetzt.

**Claims**

1. Process for recovering uranium from a raffinate which is obtained by extracting phosphoric acid from uranium-containing crude wet-processed phosphoric acid in the presence of a mineral acid with the aid of organic extractants being immiscible or only partially miscible with water, and separating the resulting organic phosphoric acid extract from residue not taken up by the extract, which comprises : subjecting the raffinate retained as residue to thermal treatment and thereby freeing it from dissolved or emulsified residual extractant, treating the raffinate with a water-immiscible solvent for uranium and thereby extracting the uranium, and separating the extracted uranium from the undissolved raffinate portion.

2. Process as claimed in claim 1, wherein the raffinate to undergo thermal treatment contains at most 10 weight % of $P_2O_5$, 5 to 50 weight % of sulfuric acid and 0.1 to 5 weight % of dissolved or emulsified organic extractant.

3. Process as claimed in claim 1 or 2, wherein the raffinate is thermally treated by stripping it with steam.

4. Process as claimed in any of claims 1 to 3, wherein the organic solvent used for extracting the uranium are solutions of dialkylphosphoric acid esters and trialkyl phosphine oxides in a solvent immiscible with water, the solutions being used individually or in combination with each other.

5. Process as claimed in claim 4, wherein di(ethylhexyl)phosphate is used as the dialkylphosphoric acid ester, tri-n-octylphosphine oxide is used as the trialkylphosphine oxide, and kerosene is used as the water-insoluble organic solvent.

6. Process as claimed in any of claims 1 to 5, wherein the raffinate used is based on wet-processed phosphoric acid containing 40 to 55 weight % $P_2O_5$, the raffinate having been obtained by extracting the acid with a $C_5$-alcohol in an extraction zone comprising n stages, where n is equal to or greater than 5, the extraction being effected by admixing the acid in one of the stages n = 4 to (n − 1) with 2 to 20 weight %, based on $P_2O_5$, of sulfuric acid, and the $C_5$-alcohol and sulfuric acid being caused to flow countercurrently with respect to the phosphoric acid, 2.5 to 5.5 parts by volume of anhydrous $C_5$-alcohol or 6.0 to 8.2 parts by volume of water-saturated $C_5$-alcohol being used per part by volume of phosphoric acid.

**Revendications**

1. Procédé de récupération d'uranium à partir d'un raffinat que l'on a obtenu par extraction de l'acide phosphorique d'un acide phosphorique contenant de l'uranium préparé par le procédé humide en présence d'un acide minéral à l'aide d'agents d'extraction organiques non miscibles avec l'eau ou qui ne sont que partiellement miscibles et séparation de l'extrait organique d'acide phosphorique du résidu non absorbé dans l'extrait, caractérisé en ce que l'on soumet le raffinat retenu comme résidu à un traitement thermique pour le débarrasser de l'agent d'extraction résiduel dissous ou émulsionné, puis on extrait l'uranium du raffinat traité à l'aide de solvants pour l'uranium non miscibles avec l'eau et on sépare l'extrait d'uranium récupéré de la partie non dissoute du raffinat.

2. Procédé selon la revendication 1, caractérisé en ce que l'on utilise un raffinat présentant, avant le traitement thermique, une teneur en $P_2O_5$ de 10 % en poids au maximum, une teneur en acide sulfurique de 5 à 50 % en poids et une teneur en agent d'extraction organique dissous ou émulsionné de 0,1 à 5 % en poids.

3. Procédé selon la revendication 1 ou 2, caractérisé en ce que l'on effectue le traitement thermique du raffinat par entraînement à la vapeur d'eau.

4. Procédé selon l'une des revendications 1 à 3, caractérisé en ce que l'on utilise, comme solvants organiques pour l'extraction de l'uranium, des solutions de phosphates de dialkyles et d'oxydes de trialkylphosphines dans un solvant non miscible avec l'eau, seules ou en mélanges entre elles.

5. Procédé selon la revendication 4, caractérisé en ce que l'on utilise comme phosphate de dialkyle le phosphate de di(éthylhexyle), comme oxyde de trialkylphosphine l'oxyde de tri-n-octylphosphine et comme solvant organique non miscible avec l'eau le kérosène.

6. Procédé selon l'une des revendications 1 à 5, caractérisé en ce que l'on utilise un raffinat que l'on a obtenu en partant d'un acide phosphorique du procédé humide à 40-55 % en poids de $P_2O_5$, en soumettant cet acide dans une installation comportant n stades, où n est égal ou supérieur à 5, à l'extraction par un alcool en $C_5$ de manière à ajouter, dans l'un des stades n = 4 à (n − 1), 2 à 20 % en poids d'acide sulfurique, par rapport au $P_2O_5$, et à faire passer l'alcool en $C_5$ et l'acide sulfurique à contre-courant de l'acide phosphorique en utilisant 2,5 à 5,5 parties en volume d'alcool en $C_5$ anhydre ou 6,0 à 8,2 parties en volume d'alcool en $C_5$ saturé d'eau par partie en volume d'acide phosphorique.